**Europäisches Patentamt**

(19) **European Patent Office**

**Office européen des brevets**

(11) Veröffentlichungsnummer: **0 175 802**
**B1**

(12) # EUROPÄISCHE PATENTSCHRIFT

(45) Veröffentlichungstag der Patentschrift:
24.05.89

(51) Int. Cl.⁴: **F 16 H 1/22,** F 16 H 13/02,
F 03 D 11/02

(21) Anmeldenummer: **84111381.4**

(22) Anmeldetag: **24.09.84**

(54) Getriebe für die Übertragung extrem hoher Leistungen mit grossem Übersetzungsverhältnis.

(43) Veröffentlichungstag der Anmeldung:
02.04.86 Patentblatt 86/14

(45) Bekanntmachung des Hinweises auf die Patenterteilung:
24.05.89 Patentblatt 89/21

(84) Benannte Vertragsstaaten:
DE GB

(56) Entgegenhaltungen:
EP-A- 0 118 358
DE-A- 2 528 527
DE-C- 843 782
FR-A- 2 278 022
US-A- 1 666 361
US-A- 3 122 932
US-A- 3 667 319

(73) Patentinhaber: **Braren, Rudolf, Connollystrasse 26/7,
D-8000 München 40 (DE)**

(72) Erfinder: **Braren, Rudolf, Connollystrasse 26/7,
D-8000 München 40 (DE)**

(74) Vertreter: **Flügel, Otto, Dipl.-Ing. et al, Lesser, Flügel &
Säger Patentanwälte
Richard-Strauss-Strasse 56 Postfach 81 05 40,
D-8000 München 80 (DE)**

ACTORUM AG

## Beschreibung

Die Erfindung bezieht sich auf ein Getriebe der im Oberbegriff des Anspruches 1 wiedergegebenen Gattung.

Die getriebliche Übertragung sehr hoher Leistungen mit hohem Übersetzungsverhältnis bereitet besondere Schwierigkeiten. Zahnradgetriebe herkömmlicher Art benötigen eine hohe Zahl von Getriebegliedern, sind entsprechend verlustbehaftet und als Sonderkonstruktionen sehr aufwendig. Sie haben sich nicht bewährt, wenn man das Anwendungsbeispiel als Übertragungsglied zwischen einem Windrotor und einem von diesem anzutreibenden elektrischen Generator betrachtet, bei dem Übertragungsleistungen von 4000 kW angestrebt werden. Der Windrotor hat dabei eine Drehzahl von ca. 20 U/min, der anzutreibende Generator soll dabei in wirtschaftlicher Weise 4polig ausgebildet sein, was einer Drehzahl von 1500 U/min entspricht, so dass ein Gesamtübersetzungsverhältnis von mehr als 1:70 ins Schnelle erforderlich ist.

Bei einem bekannten Getriebe der eingangs genannten Art – US-A 1 666 361 – sind sämtliche Stufen mit Stirnzahnrädern verwirklicht, wobei die Einzelgetriebe einstufig und daher, beispielsweise als Evolventengetriebe, mit nur beschränkt hohem Übersetzungsverhältnis ausgebildet sind.

Zur Umgehung der formschlüssig arbeitenden Getriebe herkömmlicher Art hat man vorgeschlagen, ein zweistufiges Riemengetriebe einzusetzen, das jedoch nur eine Übersetzung ins Schnelle auf 750 U/min erreicht und bereits extreme Ausmasse, Gewichte und Lagerkräfte verlangt, nämlich eine Antriebsriemenscheibe von über 8 m Durchmesser und 2 m Breite sowie Riemenvorspann- und damit Lagerkräfte von ca. 120 t bei einem entsprechend hohen Gesamtgewicht.

Der Erfindung liegt die Aufgabe zugrunde, ein Getriebe der eingangs genannten Gattung, insbesondere für Anwendungsgebiete der vorstehend geschilderten extremen oder anderer ähnlicher Art, zu schaffen, das besonders kompakt, raumsparend und leicht aus einfachen bzw. handelsüblichen Getriebeeinheiten aufgebaut ist, hohe Lagerbelastungen vermeidet, einfach montierbar ist und praktisch wartungsfrei mit hoher Laufruhe, hohem Wirkungsgrad und grosser Lebensdauer arbeitet.

Erfindungsgemäss schliesst sich an die ein nur geringes Übersetzungsverhältnis aufweisende oder auch im Kupplungszustand betriebene Verzweigungsstufe eine Hochübersetzungsstufe aus einer Vielzahl synchron angetriebener Zykloidengetriebe an, auf die die Leistung verzweigt wird, so dass jedes Einzelgetriebe nur einen der Zahl der Einzelgetriebe entsprechenden Bruchteil der Leistung zu übertragen hat. Diese Zykloidengetriebe weisen einen Grossteil oder das gesamte Übersetzungsverhältnis des Getriebes auf, was aufgrund des jeweils zu übertragenden Bruchteils der Leistung möglich wird. In der an die Hochübersetzungsstufe angeschlossenen Sammelstufe wird die verzweigte und in Bruchteilen übertragene Leistung wieder zusammengeführt. Insbesondere in dieser Form eignet sich das erfindungsgemässe Getriebe besonders für den Antrieb eines Generators durch einen Windrotor.

Die einzelnen Stufen können kraft- oder formschlüssig arbeitend ausgebildet werden, da entweder die zu übertragende Leistung gross und das Übersetzungsverhältnis klein bzw. 1:1 ist – Verzweigungsstufe und gegebenenfalls Sammelstufe – oder die zu übertragende Leistung klein und das Übersetzungsverhältnis gross ist, wie das für das Einzelgetriebe der Hochübersetzungsstufe der Fall ist. Die als Einzelgetriebe eingesetzten Zykloidengetriebe arbeiten formschlüssig und sind insbesondere nach der hoch belastbaren und exakt fertigbaren Bauart gemäss DE-Patent 2 433 675 ausgeführt.

In besonders eleganter und raumsparender Ausführung der Erfindung werden die Zykloidengetriebe im Inneren der Ausgangsglieder der Verzweigungsstufe untergebracht bzw. bilden mit ihren radial aussenliegenden Eingangsgliedern die Ausgangsglieder der Verzweigungsstufe. In herkömmlicher Schemadarstellung werden also – und das trifft raummässig zu – zwei Getrieberäder für eine zweistufige und vier Getrieberäder für eine dreistufige Ausführung des erfindungsgemässen Getriebes in dieser Ausführungsform benötigt.

Die Verzweigungsstufe ist wegen der hohen Kräfte bevorzugt als Reibrad-Getriebestufe ausgebildet, gegebenenfalls unterstützt durch eine Zahnradsynchronisierung in Form von Zahnrädern mit koaxialen und axial nebengeordneten Teilkreis-Reibzylinderscheiben. Für diesen Fall sind die Einzelgetriebe in Richtung auf die Achse des als zentrales Antriebs-Getriebe-Reibrad ausgebildeten Eingangsgliedes der Verzweigungsstufe versetzbar ausgebildet und in dieser Richtung – insbesondere gesteuert – druckbeaufschlagbar geführt an dem Getriebegehäuse abgestützt gehalten. Das Getriebegehäuse nimmt damit alle Reaktionskräfte auf, so dass wegen der gleichmässigen Verteilung der Einzelgetriebe um das Antriebs-Getriebereibrad dieses von den Einzelgetrieben zentriert wird und insoweit keiner eigenen radialdruckbelastbaren Lagerung bedarf.

In weiterhin bevorzugter Ausführung werden diese Zentrierung und die erforderliche gleichmässige Andruckkraft zwischen den Einzelgetrieben bzw. den Verzweigungs-Getrieberädern und dem Antriebsgetrieberad selbsttätig dadurch erreicht, dass die Einzelgetriebe jeweils an Schwenkflanschen gelagert gehalten sind, die unter der drehrichtungsabhängigen Reaktionskraft die Einzelgetriebe in die Anpressstellung an das Antriebs-Getriebereibrad überführen. Die Schwenkarme sind bevorzugt mit steuerbaren Vorspanner in die Anlagestellung an dem Antriebs-Getrieberad überführbar und durch Anpressdruckmessung gezielt auf identischen Anpressdruck einzustellen, soweit dies wie vorgeschildert nicht genügend selbsttätig und stabil erreicht werden sollte.

Die mit niedrigem Übersetzungsverhältnis oder im Kupplungszustand betriebene Sammelstufe kann form- oder kraftschlüssig ausgebildet sein. Es ist auch ein Betrieb vom Schnellen ins Langsame möglich, wobei die Sammelstufe die Verzweigungsfunktion und die Verzweigungsstufe die Sammelfunktion übernimmt. Durch Drehrichtungsumkehr oder entsprechend an die Drehrichtung angepasste Anordnung der Schwenkflansche derart, dass die Selbstanpressfunktion erhalten bleibt, arbeitet das Getriebe ins Langsame, ansonsten wie vorstehend und nachfolgend anhand der Ausführungsbeispiele beschrieben in umgekehrter Richtungsfunktion der Einzelteile.

Bei Auftreten von Axialbelastungen, wie sie durch einen antreibenden Windrotor oder beispielsweise ein angetriebenes Rührwerk hervorgerufen werden, kann man Spurkränze im Bereich der Reibradeingriffe vorsehen, wie dies aus dem Gebiet der Schienenfahrzeuge bekannt ist. Vorzugsweise können die Reibräder entsprechend kegelförmig ausgebildet und einander zugeordnet werden, so dass die Axialkraft insoweit verlustfrei zur Erzielung des Anpressdruckes beiträgt und eine Art selbsttätiger Reibkupplungsphase erreicht wird.

Die Reibräder können in ihrer Reibangriffszone aus Stahl oder entsprechend hierfür bekannten Werkstoffpaarungen bestehen, sie können auch Reibschichten erhöhten Reibungskoeffizienten durch Verwendung von Gummi aufweisen, wie dies ebenfalls bei Schienenfahrzeugen bekannt ist.

Weitere Einzelmerkmale und bevorzugte Ausführungsformen der Erfindung ergeben sich aus den Unteransprüchen und den in der Zeichnung wiedergegebenen Ausführungsbeispielen, auf die besonders Bezug genommen wird und deren nachfolgende Beschreibung die Erfindung näher erläutert. Es zeigen:

Fig. 1 einen schematischen Längsschnitt durch ein erstes Ausführungsbeispiel;

Fig. 2 in der linken Hälfte eine schematische Schnittansicht nach der Linie A–A in Fig. 1 und in der rechten Hälfte eine schematische Schnittansicht nach der Linie B–B in Fig. 1, jeweils unter Weglassen des Getriebegehäuses;

Fig. 3 eine Teilschnittansicht nach der Linie C–C in Fig. 1;

Fig. 4 einen schematischen Längsschnitt durch ein zweites Ausführungsbeispiel.

Das insgesamt mit 1 bzw. 1' bezeichnete Getriebe beider Ausführungsformen weist ein das Getriebe umfassendes mantelseitig rohrförmig ausgebildetes Getriebegehäuse 2 bzw. 2' auf, an dem eingangsseitig des Getriebes ein windgetriebener Rotor 3 angeordnet und ausgangsseitig ein elektrischer Generator 4 angeflanscht ist. Das Getriebe beider Ausführungsformen 1 bzw. 1' ist aus einer Verzweigungsstufe 5, einer Hochübersetzungsstufe 6 und einer Sammelstufe 7 zusammengesetzt. Die Rotationsgeschwindigkeit des Windrotors 3 beträgt etwa 20 U/min, der Generator 4 wird mit einer Drehzahl von 1500 U/min betrieben. Die mit der die Propellerflügel des Rotors 3 haltende Nabe einstückig ausgebildete bzw. verdrehfest verbundene Getriebeeingangswelle 8 dreht um eine für die gesamte Anordnung zentrale Achse 9. An der Getriebeeingangswelle 8 ist ein Antriebs-Getrieberad 10 bzw. 10' verdrehfest gehalten, um das herum eine Vielzahl – im vorliegenden Beispiel zehn – von Einzelgetrieben 11 angeordnet ist, die die Hochübersetzungsstufe 6 bilden und deren am Aussenumfang liegende Eingangsglieder, die zugleich die Ausgangsglieder der Verzweigungsstufe 5 bilden, als Verzweigungs-Getrieberäder 12 bzw. 12' ausgebildet und als Reibräder ausgestaltet sind.

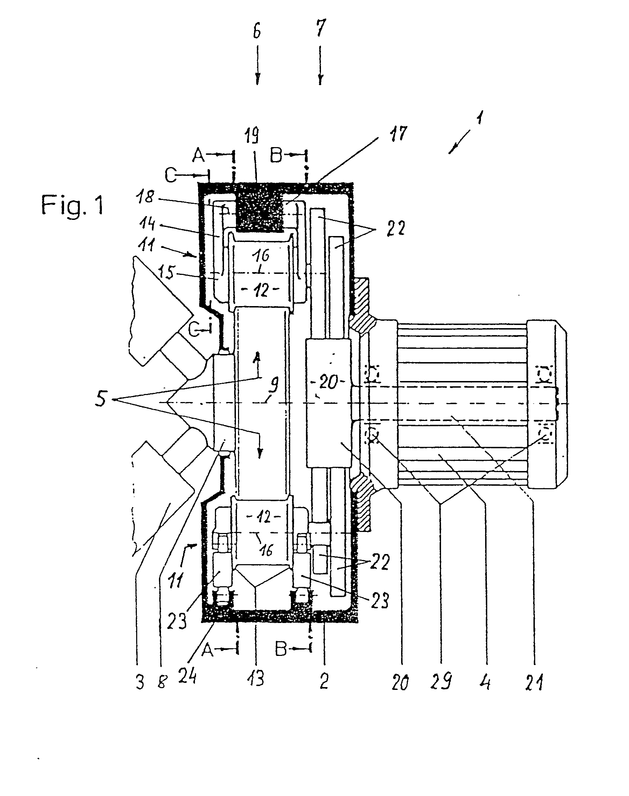

Die Verzweigungs-Getriebereibräder 12 sind beim Ausführungsbeispiel gemäss Fig. 1 beidseitig mit Spurkränzen 13 versehen, die zu beiden Randseiten der Reibmantelfläche des Antriebs-Getriebereibrades 10 zur zentralen Achse 9 hin vorspringend ausgebildet sind und die vom Windrotor 3 ausgehende Axialkräfte auffangen.

Innerhalb der Verzweigungs-Getrieberäder 12 bzw. 12' sind die übrigen Getriebeglieder der als Zykloidengetriebe ausgebildeten Einzelgetriebe 11 angeordnet und in bekannter Weise derart ausgebildet, dass die Ausgangsglieder der Einzelgetriebe 11 um dieselbe Lagerachse 16 bzw. 16' drehen wie die die Verzweigungs-Getriebereibräder 12 bzw. 12' bildenden Eingangsglieder.

Die Lagerachse 16 bzw. 16' eines jeden Einzelgetriebes 11 bildet die Mittellinie von Lagerbolzen, mit denen die Einzelgetriebe jeweils an dem freien Ende 15 eines Schwenkflansches 14 bzw. 14' gehalten sind, der das Reaktionsglied des Zykloiden-Einzelgetriebes in Form von in Kurvenscheibenbohrungen eingreifenden Führungsbolzen verdrehfest hält. Die Schwenkflansche 14 bzw. 14' sind anderen Endes 17 um Anlenkachsen 18 bzw. 18' schwenkbar in getriebegehäusefest ausgebildeten Schwenkfüssen 19 abgestützt. Die Schwenkflansche 14 bzw. 14' sind so gelagert und bemessen, dass sie unter Berücksichtigung des abtriebsseitigen Drehwiderstandes die Einzelgetriebe 11 bzw. deren Verzweigungs-Getrieberäder 12 bzw. 12' unter Drehrichtung bei Reibangriff an dem zentralen Antriebs-Getriebereibrad 10 bzw. 10' auf dieses zu gerichtet zu versetzen versuchen. Bei Gleichgewicht zwischen der auf die Verzweigungs-Getrieberäder 12 bzw. 12' ausgeübten Tangentialreibkraft und der abtriebsseitigen Widerstandskraft verharren die Schwenkflansche 14 bzw. 14' in der dann eingenommenen Verschwenklage und üben einen bestimmten gleichmässigen Anpressdruck der Verzweigungs-Getrieberäder 12 bzw. 12' auf das zentrale Antriebsrad 10 bzw. 10' aus. Zu diesem Zweck sind die Schwenkflansche 14 bzw. 14' derart bemessen und angeordnet, dass die senkrecht durch die Anlenkachse 18 bzw. 18' und die Lagerachse 16 bzw. 16' geführte Gerade in der Verschwenkebene des Schwenkflansches 14 bzw. 14' mit der in gleicher Verschwenkebene gelegenen Geraden, die die Anlenkachse 18 bzw.

18' und die zentrale Achse 9 des Antriebs-Getriebereibrades 10 bzw. 10' schneidet, einen spitzen Winkel 27 einschliesst, der sich unter den bei Reibangriff auftretenden Kräften bis zum Gleichgewicht zu verringern sucht. Der Anpressdruck bzw. die Verschwenkstellung der Schwenkflansche 14 bzw. 14' wird durch die Sammelstufe 7 zusätzlich synchronisiert.

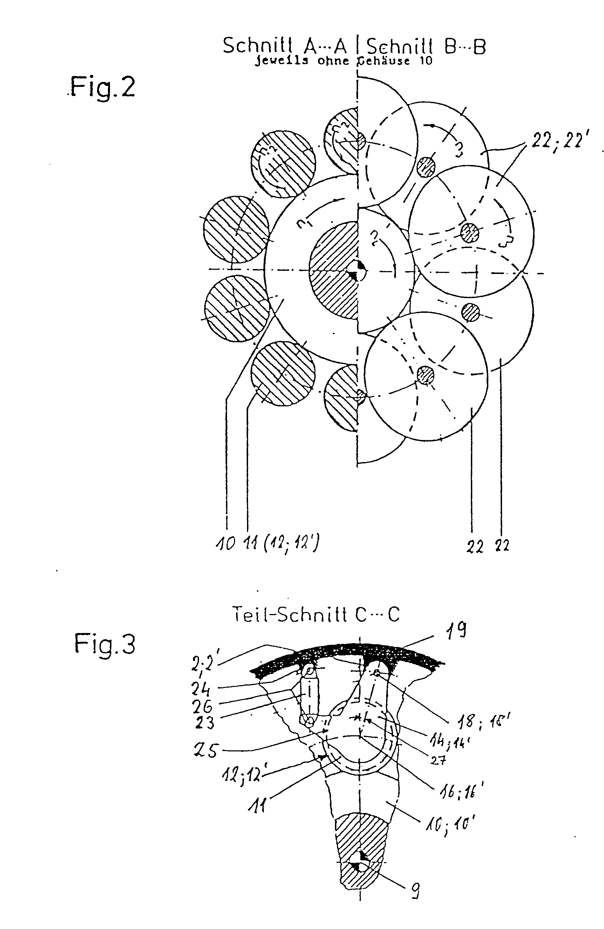

In den dargestellten Beispielen ist das zentrale Antriebs-Getriebereibrad 10 bzw. 10' nicht gelagert, es wird durch die Einzelantriebe 11 bzw. die jeweils zugeordneten Schwenkflansche 14 bzw. 14' selbsttätig zentriert. Es kann jedoch auch eine Lagerung des Antriebs-Getrieberades 10 bzw. 10' vorgesehen sein, um insbesondere dessen Lage bei Betriebsaufnahme insoweit vorzugeben. In den dargestellten Beispielen sind Vorspanner in Form von gesteuerten hydraulischen Kolben-Zylinder-Einrichtungen 23 vorgesehen, die einen Endes an einem seitlichen Ausleger 25 der Schwenkflansche 14 bzw. 14' angelenkt und anderen Endes über Spannerfüsse 24 an dem Getriebegehäuse 2 bzw. 2' entsprechend gelenkig jeweils über Spannerbolzen 26 abgestützt sind, derart, dass eine Beaufschlagung in Richtung ausfahrenden Kolbens den spitzen Winkel 27 verkleinert. Auf Fig. 3 der Zeichnung wird ausdrücklich Bezug genommen.

Die Kolben-Zylinder-Einrichtungen 23 ermöglichen eine Anfangszentrierung des Antriebs-Getriebereibrades 10 bzw. 10'. Durch Messung der Druckspannung in den Schwenkflanschen 14 bzw. 14' kann darüber hinaus eine exakt genaue und konstant bleibende Druckbeaufschlagung der jeweils zugehörigen Verzweigungs-Getriebereibräder 12 bzw. 12' auf das zentrale Antriebs-Getriebereibrad 10 bzw. 10' und damit eine exakt gleiche Leistungsverteilung auf die Einzelgetriebe 11 gesteuert sichergestellt werden. Durch gesteuertes Reagieren auf Druckänderungen in den Kolben-Zylinder-Einrichtungen 23 lassen sich Pendelerscheinungen ausschalten. Durch Ausfahrlängenmessung der Kolben-Zylinder-Einrichtungen 23 und/oder durch Messung der spitzen Winkel 27 kann die Zentrierung stabilisiert werden, die im übrigen durch die Sammelstufe 7 mit gelagerter Getriebeausgangswelle 21 unterstützt ist.

Die koaxial zu den Eingangsgliedern bzw. Verzweigungs-Getriebereibrädern 12 bzw. 12' angeordneten Ausgangsglieder der Einzelgetriebe 11 sind jeweils verdrehfest mit Sammel-Getrieberädern 22 bzw. 22' verbunden, die alle an der Mantelfläche eines zentral angeordneten Abtriebs-Getrieberades 20 bzw. 20' reibschlüssig angreifen. Das Abtriebs-Getrieberad 20 bzw. 20' ist verdrehfest mit einer koaxial angeordneten Getriebeausgangswelle 21 verbunden, deren Achse mit der zentralen Achse 9 des Getriebes bzw. des zentralen Antriebs-Getrieberades 10 bzw. 10' zusammenfällt. In den beiden wiedergegebenen Beispielen ist das Übersetzungsverhältnis der Sammelstufe mit 1:1 gewählt, d.h. die Sammelstufe 7 arbeitet im Kupplungszustand. Weiterhin ist bei den wiedergegebenen Ausführungsbeispielen die Getriebeausgangswelle 21 zugleich die Rotorwelle des Generators 4.

Wie insbesondere Fig. 2 erkennen lässt, überlappen sich die Sammel-Getriebereibräder 22 bzw. 22' in axialer Richtung aufgrund der Vielzahl der vorgesehenen Einzelgetriebe 11 und des vorgesehenen Übersetzungsverhältnisses von 1:1 der Sammelstufe 7. Aus diesem Grunde sind die Sammel-Getrieberäder 22 bzw. 22' in Umfangsrichtung gesehen abwechselnd axial gegeneinander versetzt.

Fig. 2 lässt weiterhin das Drehzahlverhältnis zwischen den einzelnen Getriebestufen erkennen. Zwischen dem Antriebs-Getrieberad 10 bzw. 10' mit einer Drehzahl $n_1$ und den Verzweigungs-Getrieberädern 12 bzw. 12' mit der Drehzahl $n_2$ besteht ein Übersetzungsverhältnis von $i_{1,2}$ = 3,57. Zwischen den die Eingangsglieder der Einzelgetriebe 11 bildenden Verzweigungs-Getrieberädern 12 bzw. 12' mit der Drehzahl $n_2$ und den mit den Ausgangsgliedern der Einzelgetriebe 11 verdrehfest verbundenen Sammel-Getrieberädern 22 bzw. 22' mit der Drehzahl $n_3$ besteht ein Übersetzungsverhältnis von 1:20. Zwischen den Sammel-Getrieberädern 22 bzw. 22' und dem zentralen Abtriebs-Getrieberad 20 bzw. 20' besteht ein Übersetzungsverhältnis von 1:1, die Sammelstufe 7 arbeitet also im Kupplungsbereich. Insgesamt wird damit erreicht, dass die Drehzahl des Windrotors von ca. 20 U/min auf eine Drehzahl der Getriebeausgangswelle 21 von 1500 U/min übersetzt wird.

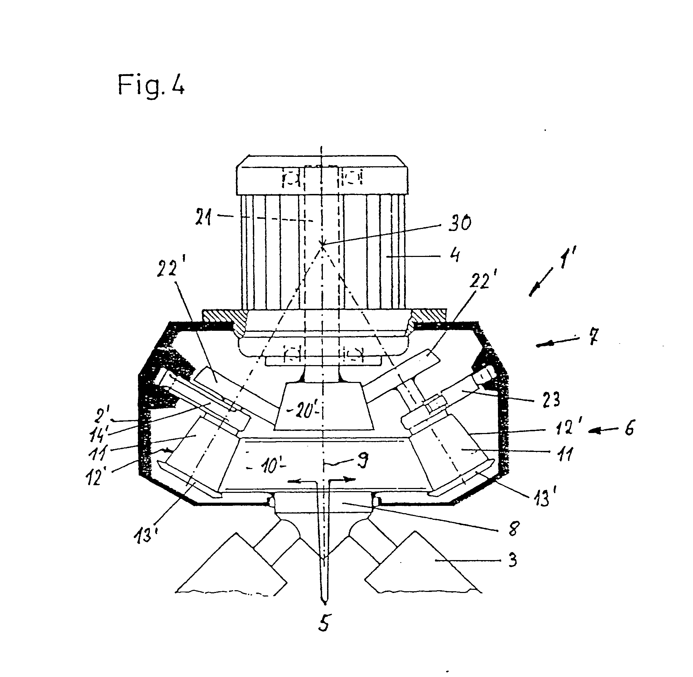

Die beiden Ausführungsbeispiele nach den Figuren 1 und 4 – die Figuren 2 und 3 stehen insoweit funktionsmässig für beide Ausführungsbeispiele – unterscheiden sich im wesentlichen in den Getriebeteilen, deren Bezugsziffern einmal ohne ' (Fig. 1) und mit ' (Fig. 4) gekennzeichnet sind.

In Fig. 1 sind die Mantelflächen der als Reibräder ausgebildeten Getrieberäder 10 und 12 trommelförmig ausgebildet, d.h. ihre Mantelflächen erstrecken sich in Achsrichtung gesehen unter gleichbleibendem Abstand von den zugehörigen Achsen 9 bzw. 16. Die Schwenkflansche 14 sind zweiarmig ausgebildet und greifen zu beiden Stirnseiten der Einzelgetriebe 11 an, was nicht zwingend ist. Die Anlenkachse 18 des Schwenkflansches 14 und die Lagerachse 16 des jeweiligen Einzelgetriebes 11 verlaufen parallel zur zentralen Achse 9 des Antriebs-Getrieberades 10. Die von dem Windrotor 3 bei Betrieb ausgehende Axiallast, die unter Bezugnahme auf das eingangs genannte Beispiel eine Grössenordnung von 60 t erreicht, wird durch Spurkränze 13 aufgefangen, die zu beiden Stirnseiten der Verzweigungs-Getrieberäder 12 vorgesehen sind und die Randbereiche an beiden Stirnseiten des Antriebs-Getrieberades 10 übergreifen. Die Anordnung kann auch derart getroffen werden, dass die Spurkränze an dem Antriebs-Getrieberad 10 vorgesehen sind und die Randbereiche der Verzweigungs-Getrieberäder 12 entsprechend übergreifen.

Bei dem Ausführungsbeispiel gemäss Fig. 4 sind sämtliche Getriebereibräder, also das Antriebs-Getriebereibrad 10′, die an diesem angreifenden Verzweigungs-Getrieberäder 12′, das zentrale Abtriebs-Getrieberad 20′ und die an diesem angreifenden Sammel-Getriebereibräder 20′ mit kegeligen Mantelflächen ausgebildet und derart angeordnet, dass sich die Lagerachsen 16′ der Einzelgetriebe 11 mit der zentralen Achse 9 in einem Punkte 30 schneiden. Auf Fig. 4 wird in diesem Zusammenhang ausdrücklich Bezug genommen. Die Schwenkflansche 14′ sind einarmig ausgebildet, und ihre Anlenkachsen 18′ verlaufen parallel zu den Lagerachsen 16′ der Einzelgetriebe 11 bzw. der jeweils zugeordneten Verzweigungs- und Sammel-Getriebereibräder 12′ bzw. 22′. Die Stirnseiten mit den jeweils grösseren Durchmessern dieser Getrieberäder sind dabei dem Windrotor 3 zugewandt, so dass dessen Axialkraft das Antriebs-Getriebereibrad 10′ in Richtung des Angriffes an den Verzweigungs-Getriebereibrädern 12′ beaufschlagt. Soweit das axiale Lagerspiel in den Einzelgetrieben 11 dies zulässt, wird eine entsprechende Druckkomponente auch zwischen den Sammel-Getriebereibrädern 22′ und dem Abtriebs-Getriebereibrad 20′ hervorgerufen. Es ist nur ein Spurkranz 13′ erforderlich.

Das vorgeschilderte Getriebe weist folgende Vorteile auf: Die Axial- und Radialkräfte gehen in die Getriebefunktion ein. Der Rotor wird aufgrund selbsteinstellender Umfangskräfte selbst zentriert. Der Aufbau ist koaxial analog einem Planetengetriebe und ermöglicht somit die koaxiale Aufnahme des Reaktionsmomentes. Die Gesamtleistung wird auf mehrere gleiche, einfach zu dimensionierende und überschaubare Einzelgetriebe verzweigt. Die Normal-Kräfte im Getriebe heben sich gegenseitig auf. Durch hydraulische Voranpresskraft wird der Rotor in der Ruhestellung fixiert und zum Ausgleich von Toleranzfehlern feineingestellt. Besondere Kupplungen sind nicht erforderlich. Drehschwingungen werden im Getriebe nicht erzeugt. Eventuelle Drehschwingungen vom Rotor können durch elastomere Abstützung der Einzelgetriebe kompensiert werden. Insbesondere bei Verwendung der als bevorzugt bezeichneten Ausführungsform der Zykloidengetriebe ist deren Fertigung auf numerisch-gesteuerten Anlagen sichergestellt und einfach. Das Getriebe arbeitet praktisch wartungsfrei mit hoher Lebensdauer, hohem Wirkungsgrad und hoher Laufruhe. Es ergibt sich ein kleines Bauvolumen bei geringem Gewicht und preisgünstiger Herstellung. Die Montage ist einfach.

**Patentansprüche**

1. Getriebe (1; 1′) für die Übertragung extrem hoher Leistungen mit grossem Übersetzungsverhältnis ins Schnelle, mit einer wenigstens zweistufigen Getriebeausführung, deren in Leistungsübertragungsrichtung erste Stufe als Verzweigungsstufe (5) mit niedrigem Übersetzungsverhältnis einschliesslich Kupplungsbereich ausgebildet ist und deren an die Verzweigungsstufe (5) angeschlossene zweite Stufe als Hochübersetzungsstufe (6) aus einer Vielzahl von parallel arbeitenden Einzelgetrieben (11) mit hohem Übersetzungsverhältnis ausgebildet ist, und mit einer an die Hochübersetzungsstufe (6) angeschlossenen dritten Stufe, die als Sammelstufe (7) mit niedrigem Übersetzungsverhältnis einschliesslich Kupplungsbereich ausgebildet ist und eine – insbesondere koaxial zur Getriebeeingangswelle (8) und damit der Verzweigungsstufe (5) verlaufende – Getriebeausgangswelle (21) aufweist, dadurch gekennzeichnet, dass die Einzelgetriebe (11) der Hochübersetzungsstufe (6) als Zykloidengetriebe ausgebildet sind.

2. Getriebe nach Anspruch 1, dadurch gekennzeichnet, dass die Verzweigungsstufe (5) kraftschlüssig ausgebildet ist.

3. Getriebe nach Anspruch 2, dadurch gekennzeichnet, dass die Sammelstufe formschlüssig ausgebildet ist.

4. Getriebe nach Anspruch 2, dadurch gekennzeichnet, dass die Sammelstufe (7) kraftschlüssig ausgebildet ist.

5. Getriebe nach einem der Ansprüche 1 bis 4, dadurch gekennzeichnet, dass die Verzweigungsstufe (5) ein als zentrales, koaxial an die Getriebeeingangswelle (8) verdrehfest angeschlossenes Antriebs-Getrieberad (10; 10′) ausgebildetes Eingangsglied aufweist, an dem über dessen Umfang gleichmässig verteilte, als Verzweigungs-Getrieberäder (12; 12′) ausgebildete Ausgangsglieder angreifen, deren jedes verdrehfest mit dem Eingangsglied eines Einzelgetriebes (11) der Hochübersetzungsstufe (6) verbunden ist.

6. Getriebe nach einem der Ansprüche 1 bis 5, dadurch gekennzeichnet, dass die Ausgangsglieder (12; 12′) der Verzweigungsstufe (5) als Eingangsglieder der Einzelgetriebe (11) der Hochübersetzungsstufe (6) ausgebildet sind.

7. Getriebe nach Anspruch 5 oder 6, dadurch gekennzeichnet, dass das Antriebs-Getrieberad (10; 10′) und die Verzweigungs-Getrieberäder (12; 12′) als Reibräder oder als Zahnräder mit koaxial nebengeordneten Teilkreiszylindern ausgebildet sind.

8. Getriebe nach einem der Ansprüche 5 bis 7, dadurch gekennzeichnet, dass die Ausgangsglieder der Verzweigungsstufe bzw. die Eingangsglieder der Einzelgetriebe (11) – Verzweigungs-Getrieberäder (12; 12′) – das zentrale Antriebs-Getrieberad (10; 10′) der Verzweigungsstufe (5) zentrierend zwischen sich aufnehmend an dem Getriebegehäuse (2; 2′) abgestützt angeordnet sind.

9. Getriebe nach einem der Ansprüche 5 bis 8, dadurch gekennzeichnet, dass die Einzelgetriebe (11) der Hochübersetzungsstufe (6) in Richtung auf die Achse (9) des zentralen Antriebs-Getrieberads (10; 10′) der Verzweigungsstufe (5) zu versetzbar an dem Getriebegehäuse (2; 2′) abgestützt gehalten sind.

10. Getriebe nach Anspruch 9, dadurch gekennzeichnet, dass die Einzelgetriebe (11) in Richtung der Versetzbewegung auf die Achse (9) des zentralen Antriebs-Getrieberades (10; 10') federbelastet ausgebildet sind.

11. Getriebe nach Anspruch 9 oder 10, dadurch gekennzeichnet, dass die Einzelgetriebe (11) in Richtung der Versetzbewegung auf die Achse (9) des zentralen Antriebs-Getrieberades (10; 10') – insbesondere in Abhängigkeit von dem Anpressdruck zwischen dem zentralen Antriebs-Getrieberad (10; 10') und den Verzweigungs-Getrieberädern (12; 12') – gesteuert belastbar ausgebildet sind.

12. Getriebe nach Anspruch 11, dadurch gekennzeichnet, dass die Einzelgetriebe (11) jeweils mittels eines steuerbaren Vorspanners, insbesondere einer hydraulisch betriebenen Kolben-Zylinder-Einrichtung (23), in Richtung auf die Achse (9) des zentralen Antriebs-Getrieberades (10; 10') druckbeaufschlagt versetzbar ausgebildet sind.

13. Getriebe nach einem der Ansprüche 5 bis 11, dadurch gekennzeichnet, dass jedes Einzelgetriebe (11) an dem einen Ende (15) eines ein- oder mehrarmigen Schwenkflansches (14; 14') gelagert ist, der anderen Endes (17) an dem Getriebegehäuse (2; 2') angelenkt ist, derart, dass die durch die Lagerachse (16; 16') und die Anlenkachse (18; 18') und die Achse (9) des zentralen Antriebs-Getrieberades (10; 10') gelegten Geraden einen spitzen Winkel (27) einschliesst, der sich durch den Angriff zwischen dem zentralen Antriebs-Getrieberad (10; 10') und den Verzweigungs-Getrieberädern (12; 12') bei gegebener Antriebsdrehrichtung (28) zu verkleinern sucht.

14. Getriebe nach Anspruch 13, dadurch gekennzeichnet, dass an den Schwenkflanschen (14; 14') ausserhalb deren Gelenkachse (18; 18') jeweils ein Vorspanner, insbesondere eine hydraulische Kolben-Zylinder-Einrichtung (23), angreift, die anderen Endes an dem Getriebegehäuse (2; 2') abgestützt ist und die unter ihrem Arbeitshub dem Schwenkflansch (14; 14') in Richtung einer Verkleinerung des spitzen Winkels (27) und damit des Angriffes des zugehörigen Einzelgetriebes (11) an dem zentralen Antriebs-Getrieberad (10; 10') beaufschlagt.

15. Getriebe nach einem der Ansprüche 1 bis 14, dadurch gekennzeichnet, dass die Sammelstufe (7) ein als zentrales, koaxial an die Getriebeausgangswelle (21) verdrehfest angeschlossenes Abtriebs-Getrieberad (20; 20') ausgebildetes Ausgangsglied aufweist, an dem über dessen Umfang gleichmässig verteilte und gegebenenfalls in Achsrichtung abwechselnd zueinander versetzte, als Sammel-Getrieberäder (22; 22') ausgebildete Eingangsglieder angreifen, deren jedes verdrehfest mit dem Ausgangsglied eines Einzelgetriebes (11) der Hochübersetzungsstufe (6) verbunden ist.

16. Getriebe nach Anspruch 15, dadurch gekennzeichnet, dass jedes Sammel-Getrieberad (22; 22') koaxial zu dem Verzweigungs-Getrieberad (12; 12') – Eingangsglied – des zugehörigen Einzelgetriebes (11) angeordnet ist.

17. Getriebe nach Anspruch 15 oder 16, dadurch gekennzeichnet, dass das Abtriebs-Getrieberad (20; 20') und die Sammel-Getrieberäder (22; 22') als Reibräder oder als Zahnräder mit koaxial nebengeordneten Teilkreiszylindern ausgebildet sind.

18. Getriebe nach einem der Ansprüche 5 bis 17, dadurch gekennzeichnet, dass die Getrieberäder (10, 12, 20, 22) mit Trommelmantelflächen versehen sind, die zu den jeweils zugehörigen Achsen (9, 16) radial gleichbleibend beabstandet sind, und dass die Lagerachsen (16) und gegebenenfalls die Anlenkachsen (18) der Schwenkflansche (14) parallel zu der Achse (9) des zentralen Antriebs-Getrieberades (10) und gegebenenfalls des Abtriebs-Getrieberades (20) verlaufend angeordnet sind.

19. Getriebe nach einem der Ansprüche 5 bis 17, dadurch gekennzeichnet, dass die Getrieberäder (10', 12', 20', 22') mit Kegelmantelflächen versehen sind und dass sich die Achslinien (9, 16') der Getrieberäder (10', 12', 20', 22') in einem Punkt (30) schneiden und die Anlenkachsen (18') der gegebenenfalls vorhandenen Schwenkflansche (14') jeweils parallel zu der Lagerachse (16') des zugehörigen Einzelgetriebes (11) verlaufen.

20. Getriebe nach Anspruch 18 oder 19, dadurch gekennzeichnet, dass bei Auftreten einer axialen Antriebs- oder Abtriebskraft zwischen den aneinander angreifenden Getrieberädern (10, 12; 10', 12') ein Spurkranzeingriff (13; 13') vorgesehen ist.

21. Getriebe nach einem der Ansprüche 1 bis 20, gekennzeichnet durch die Verwendung zur Leistungsübertragung von einem Windrotor (3) zu einer der Anzahl der Einzelgetriebe (11) entsprechenden Zahl von elektrischen Generatoren bzw. zu einem elektrischen Generator (4).

22. Getriebe nach einem der Ansprüche 1 bis 21, gekennzeichnet durch die Verwendung für die Übersetzung ins Langsame unter entsprechendem Austausch der Funktionen Eingang-Ausgang und Antrieb-Abtrieb sowie Umkehrung der Drehrichtung oder spiegelsymmetrischer Anordnung der Schwenkflansche (14; 14') hinsichtlich der Axialebene durch die Anlenkachse (18; 18') und die zentrale Achse (9).

**Claims**

1. Gear (1;1') for transmitting extremely high power with a large gear ratio into the high speed range, having an at least 2-stage gear construction, the first stage of which, in the direction of power transmission is in the form of a branching stage (5) with a low gear ratio including the coupling range whilst the second stage, adjoining the branching stage (5), is constructed as a high step-up stage (6) consisting of a plurality of individual gears (11) operating in parallel with a high gear ratio, and having a third stage adjoining the high step-up stage (6), said third stage being constructed as a collecting stage (7) with a low gear ratio including the coupling range and a gear output shaft (21) – more particularly extending coaxially with the gear input shaft (8) and hence with the branching stage (5) – characterized in that the individual gears (11) of the high step-up stage (6) are constructed as cycloid gears.

2. Gear according to claim 1, characterized in that the branching stage (5) is of force-locking construction.

3. Gear according to claim 2, characterized in that the collecting stage is of form-locking construction.

4. Gear according to claim 2, characterized in that the collecting stage (7) is of force-locking construction.

5. Gear according to one of claims 1 to 4, characterized in that the branching stage (5) comprises an input member constructed as a central driving gear wheel (10; 10') which is coaxially connected for rotation with the gear input shaft (8), said input member being acted upon by output members uniformly distributed over the circumference thereof and taking the form of branching gear wheels (12; 12'), each of which is connected for rotation with the input member of an individual gear (11) of the high step-up stage (6).

6. Gear according to one of claims 1 to 5, characterized in that the output members (12; 12') of the branching stage (5) are constructed as input members of the individual gears (11) of the high step-up stage (6).

7. Gear according to claim 5 or 6, characterized in that the driving gear wheel (10; 10') and the branching gear wheels (12; 12') are constructed as friction wheels or as cog wheels with graduated cylinders arranged coaxially beside them.

8. Gear according to one of claims 5 to 7, characterized in that the output members of the branching stage or the input members of the individual gears 11 – branching gear wheels (12; 12') – are supported on the gear housing (2; 2'), whilst holding the central driving gear wheel (10; 10') of the branching stage (5) in a centered position between them.

9. Gear according to one of claims 5 to 8, characterized in that the individual gears (11) of the high step-up stage (6) are held supported on the gear housing (2; 2') so as to be moveable towards the spindle (9) of the central driving gear wheel (10; 10') of the branching stage (5).

10. Gear according to claim 9, characterized in that the individual gears (11) are spring-loaded in the direction of the movement of displacement towards the spindle (9) of the central driving gear wheel (10; 10').

11. Gear according to claim 9 or 10, characterized in that the individual gears (11) are constructed so as to be capable of being loaded in controlled manner in the direction of the movement of displacement towards the spindle (9) of the central driving gear wheel (10; 10') – more particularly as a function of the contract pressure between the central driving gear wheel (10; 10') and the branching gear wheels (12; 12').

12. Gear according to claim 11, characterized in that the individual gears (11) are each constructed to be moveable, under the effect of pressure, by means of a controllable biasing means, particularly a hydraulically operated piston-cylinder device (23), towards the spindle (9) of the central driving gear wheel (10; 10').

13. Gear according to one of claims 5 to 11, characterized in that each individual gear (11) is mounted on one end (15) of a one-armed or multi-armed pivoting flange (14; 14'), whilst the other end (17) is hinged to the gear housing to (2; 2') in such a way that the straight line passing through the bearing spindle (16; 16') and the articulation spindle (18; 18') encloses an acute angle (27) with the straight line passing through this articulation spindle (18; 18') and the spindle (9) of the central driving gear wheel (10; 10'), this acute angle having a tendency to become smaller as a result of the action between the central driving gear wheel (10; 10') and the branching gear wheels (12; 12') in a given rotational driving direction (28).

14. Gear according to claim 13, characterized in that biasing means, more particularly a hydraulic piston-cylinder device (23) acts on the pivot flanges (14; 14') outside the articulation spindle (18; 18') thereof, the other end of said piston-cylinder device being supported on the gear housing (2; 2'), said device (23), in the course of its operating stroke, acting on the pivot flange (14; 14') in the direction of a reduction in the acute angle (27) and hence in the attack of the particular individual gear (11) on the central driving gear wheel (10; 10').

15. Gear according to one of claims 1 to 14, characterized in that the collecting stage (7) has an output member constructed as a central driven gear wheel (20; 20') coaxially connected for rotation with the gear output shaft (21), said output member being acted upon by input members in the form of collecting gear wheels (22; 22') uniformly distributed over the periphery thereof and optionally alternately off set relative to one another in the axial direction, each input member being connected for rotation with the output member of an individual gear (11) of the high step-up stage (6).

16. Gear according to claim 15, characterized in that each collecting gear wheel (22; 22') is arranged coaxially with the branching gear wheel (12; 12') – input member – of the associated individual gear (11).

17. Gear according to claim 15 or 16, characterized in that the driven gear wheel (20; 20') and the collecting gear wheels (22; 22') are constructed as friction wheels or as cog wheels with graduated cylinders arranged coaxially beside them.

18. Gear according to one of claims 5 to 17, characterized in that the gear wheels (10, 12, 20, 22) are provided with drum casings which are at a constant radial spacing from the associated spindles (9, 16), and in that the bearing spindles (16) and optionally the articulation spindles (18) of the pivot flanges (14) extend parallel to the spindle (9) of the central driving gear (10) and optionally the driven gear wheel (20).

19. Gear according to one of claims 5 to 17, characterized in that the gear wheels (10', 12', 20', 22') are provided with cone casings and the axial lines (9, 16') of the gear wheels (10', 12', 20', 22') intersect at a point (30) and the articulation spindles (18') of the pivot flanges (14') which may be present extend parallel to the bearing spindle (16') of the associated individual gear (11).

20. Gear according to claim 18 or 19, characterized in that, when an axial driving or driven force appears between the gear wheels (10, 12; 10', 12') acting on one another, there is an engagement of the rims (13; 13').

21. Gear according to one of claims 1 to 20, characterized by the use of power transmission from a wind rotor (3) to a number of electric generators corresponding to the number of individual gears (11), or to one electric generator (4).

22. Gear according to one of claims 1 to 21, characterized by its use for stepping down into a slow speed range, with corresponding change over of the input and output functions and the driving and driven functions and with reversal of the direction of rotation or mirror-symmetrical arrangement of the pivot flanges (14; 14') with respect to the axial plane through the articulation spindle (18; 18') and the central spindle (9).

**Revendications**

1. Transmission pour la transmission de puissances extrêmement importantes à grand rapport de surmultiplication, avec une réalisation de transmission présentant au moins deux étages dont, dans le sens de la transmission de puissance, le premier étage est réalisé sous forme d'étage de ramification (5) à faible rapport de transmission, incluant la zone d'accouplement, et dont le deuxième étage raccordé à l'étage de ramification (5) est réalisé à partir d'une pluralité de transmissions individuelles (11) travaillant en parallèle, à haut rapport de surmultiplication, et avec un troisième étage, raccordé à l'étage à haute surmultiplication (6), réalisé sous forme d'étage de regroupement (7) à bas rapport de surmultiplication, incluant la zone d'accouplement et présentant un arbre de sortie de transmission (21) – se développant en particulier coaxialement par rapport à l'arbre d'entrée de transmission (8) et ainsi par rapport à l'étage de ramification (5) –, caractérisée en ce que les transmissions individuelles (11) de l'étage à forte surmultiplication (6) sont réalisées sous forme de transmissions cycloïdales.

2. Transmission selon la revendication 1, caractérisée en ce que l'étage de ramification (5) est réalisé en mode positif.

3. Transmission selon la revendication 2, caractérisée en ce que l'étage de regroupement est réalisé en mode desmodromique.

4. Transmission selon la revendication 2, caractérisée en ce que l'étage de regroupement (7) est réalisé en mode positif.

5. Transmission selon l'une des revendications 1 à 4, caractérisée en ce que l'étage de ramification (5) présente un organe d'entrée réalisé sous forme de roue d'entraînement de transmission (10; 10') centrale, raccordée de manière fixe en rotation et coaxiale à l'arbre d'entrée de transmission (8), sur laquelle sont en prise des organes de sortie répartis uniformément sur sa périphérie, réalisés sous forme de roues de transmission de ramification (12; 12'), dont chacune est reliée fixée en rotation à l'organe d'entrée d'une transmission individuelle (11) de l'étage à fort rapport de surmultiplication (6).

6. Transmission selon l'une des revendications 1 à 5, caractérisée en ce que les organes de sortie (12; 12') de l'étage de ramification (5) sont réalisés sous forme d'organe d'entrée des transmissions individuelles (11) de l'étage à fort rapport de surmultiplication (6).

7. Transmission selon la revendication 5 ou 6, caractérisée en ce que la roue d'entraînement de transmission (10; 10') et les roues de transmission de ramification (12; 12') sont réalisées sous forme de roues à friction ou de roues dentées à cylindres de cercles primitifs disposés coaxialement à côté.

8. Transmission selon l'une des revendications 5 à 7, caractérisée en ce que les organes de sortie de l'étage de ramification, respectivement les organes d'entrée des transmissions individuelles (11) – les roues de transmission de ramification (12; 12') – sont disposées en appui, en centrant la roue d'entraînement de transmission (10; 10') de l'étage de ramification, se supportant entre elles sur le carter de transmission (2' 2').

9. Transmission selon l'une des revendications 5 à 8, caractérisée en ce que les transmissions individuelles (11) de l'étage à fort rapport de surmultiplication (6) sont maintenues décalables en direction de l'axe (9) de la roue centrale d'entraînement de transmission (10; 10') de l'étage de ramification (5), appuyées sur le carter de transmission (2; 2').

10. Transmission selon la revendication 9, caractérisée en ce que les transmissions individuelles (11) sont réalisées en étant sollicitées élastiquement en direction du mouvement de décalage sur l'axe (9) de la roue centrale d'entraînement de transmission (10; 10').

11. Transmission selon les revendications 9 ou 10, caractérisée en ce que les transmissions individuelles (11) sont réalisées susceptibles d'être sollicitées de manière commandée en direction du mouvement de décalage sur l'axe (9) de la roue centrale d'entraînement de transmission (10; 10') – en particulier en fonction de la pression d'application entre la roue centrale d'entraînement de transmission (10; 10') et les roues de la transmission de ramification (12; 12').

12. Transmission selon la revendication 11, caractérisée en ce que les transmissions individuelles (11) sont réalisées décalables chaque fois au moyen d'un élément de précontrainte commandable par sollicitation d'une pression, en particulier au moyen d'un dispositif piston-cylindre (23) fonctionnant hydrauliquement, en direction de l'axe (9) de la roue centrale d'entraînement de transmission (10; 10').

13. Transmission selon l'une des revendications 5 à 11, caractérisée en ce que chaque transmission individuelle (11) est montée à une extrémité (15) d'une bride pivotante (14; 14') à un ou plusieurs bras, l'autre extrémité (17) étant articulée sur le carter de transmission (2; 2'), de façon que la droite menée par l'axe de palier (16; 16') et l'axe d'articulation (18; 18') fasse un angle aigu (27) avec la droite passant par cet axe d'articulation (18; 18') et l'axe (9) de la roue centrale d'entraînement de transmission (10; 10'), angle aigu (27) tendant à diminuer par l'emprise entre roue centrale d'entraînement de transmission (10; 10') et les roues de transmission de ramification (12; 12') pour un sens de rotation d'entraînement déterminé (28).

14. Transmission selon la revendication 13, caractérisée en ce qu'un élément de précontrainte, en particulier un dispositif piston-cylindre (23) est chaque fois en prise sur les brides pivotantes (14; 14'), hors de leur axe d'articulation (18; 18'), l'autre extrémité étant appuyée sur le carter de transmission (2' 2') et sollicitant par sa course de travail la bride pivotante (14, 14') dans le sens d'une diminution de l'angle aigu (27) et ainsi de l'emprise de la transmission individuelle (11) correspondante sur la roue centrale d'entraînement de transmission (10; 10').

15. Transmission selon l'une des revendications 1 à 14, caractérisée en ce que l'étage de regroupement (7) présente un organe de sortie réalisé sous forme de roue entraînée de transmission (20; 20') centrale, coaxiale, raccordée fixée en rotation à l'arbre de sortie de transmission (21), organe de sortie sur lequel sont en prise des organes d'entrée, uniformément répartis sur sa périphérie et, le cas échéant, alternativement décalés les uns par rapport aux autres en direction axiale, organes d'entrée dont chacun est relié fixé en rotation à l'organe de sortie d'une transmission individuelle (11) de l'étage à fort rapport de surmultiplication (6).

16. Transmission selon la revendication 15, caractérisée en ce que chaque roue de transmission de regroupement (22; 22') est disposée coaxialement à la roue de transmission de ramification (12; 12') – organe d'entrée – de la transmission individuelle correspondante (11).

17. Transmission selon l'une des revendications 15 ou 16, caractérisée en ce que la roue entraînée de transmission (20; 20') et les roues de transmission de regroupement (22; 22') sont réalisées sous forme de roues à friction ou de roues dentées à cylindres de cercles primitifs placés coaxialement à côté.

18. Transmission selon l'une des revendications 5 à 17, caractérisée en ce que les roues de transmission (10, 12, 20, 22) sont pourvues de surfaces d'enveloppe en tambour, situées à une distance radiale restant identique par rapport à chacun des axes (9, 16) concernés, et en ce que les axes de palier (16) et, le cas échéant, les axes d'articulation (18) des brides pivotantes (14) sont disposés en se développant parallèlement à l'axe (9) de la roue centrale d'entraînement de transmission (10) et, le cas échéant, de la roue entraînée de transmission (20).

19. Transmission selon l'une des revendications 5 à 17, caractérisée en ce que les roues de transmission (10', 12', 20', 22') sont pourvues de surfaces d'enveloppe coniques et en ce que les axes (9, 16') des roues de transmission (10', 12', 20', 22') se coupent en un point (30) et que les axes d'articulation (18') des brides pivotantes (14') éventuellement existantes se développent chaque fois parallèlement à l'axe de palier (16') de la transmission individuelle (11) correspondante.

20. Transmission selon les revendications 18 ou 19, caractérisée en ce qu'il est prévu une prise sur collerette de guidage (13; 13') lors de l'apparition d'un effort d'entraînement ou dû à l'entraînement entre les roues de transmission (10, 12; 10', 12') en prises les unes sur les autres.

21. Transmission selon l'une des revendications 1 à 20, caractérisée par l'utilisation pour transmettre la puissance d'un rotor d'éolienne (3) à un nombre de générateurs électriques correspondant au nombre des transmission individuelles (11), respectivement à un générateur électrique (4).

22. Transmission selon l'une des revendications 1 à 21, caractérisée par l'utilisation pour la démultiplication avec réduction en intervertissant de manière correspondante les fonctions d'entrée et de sortie et entraîneur-entraîné, ainsi qu'en inversant le sens de rotation ou par une disposition selon une symétrie plane des brides pivotantes (14; 14') pour ce qui concerne le plan axial passant par l'axe d'articulation (18, 18') et l'axe central (9).

Fig. 1

**Fig.2**

Schnitt A···A | Schnitt B···B
jeweils ohne Gehäuse 10

22 ; 22'

10 11 (12; 12')  22 22

**Fig.3**

Teil-Schnitt C···C

19

2;2'
24
26
23
25
12;12'
11

18; 18'
14;14'
27
16;16'
10; 10'
9

# Fig. 4